(19) Europäisches Patentamt
European Patent Office
Office européen des brevets

(11) **EP 1 956 781 A1**

(12) **EUROPEAN PATENT APPLICATION**

(43) Date of publication:
**13.08.2008 Bulletin 2008/33**

(51) Int Cl.:
**H04L 25/03** *(2006.01)*

(21) Application number: **07405039.4**

(22) Date of filing: **08.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **ABB RESEARCH LTD.**
**8050 Zürich (CH)**

(72) Inventor: **Dacfey, Dzung**
**5430 Wettingen (CH)**

(74) Representative: **ABB Patent Attorneys**
**c/o ABB Schweiz AG**
**Brown Boveri Strasse 6**
**5400 Baden (CH)**

(54) **Method for adaptive equalization of differential phase modulated signals**

(57) For adaptive equalization of a differential phase modulated signal transmitted by a transmitter, a receiver (2) determines an estimate of a signal constellation $y_s(n)$ in the transmitter before phase integration of the transmitted signal. The receiver (2) determines an error signal $e(n)$ as a difference between the estimate of the signal constellation $y_s(n)$ and a phase-differentiated output $y_d(n)$ of an equalizer (23) in the receiver (2). Based on the error signal $e(n)$, in the receiver (2), equalizer coefficients $(w_m)$ are determined and updated adaptively. The receiver (2) is moved iteratively towards the optimum coefficient setting with regards to the minimum squared error. Preferably, the equalizer (23) is configured as a fractionally-spaced equalizer using a sampling rate higher than 1/T, T being the period of the symbols in the differential phase modulated signal. Advantageously, the equalizer (23) is insensitive to phase offset and small frequency errors.

**Fig. 2**

Printed by Jouve, 75001 PARIS (FR)

**Description**

FIELD OF THE INVENTION

The present invention relates to a method for adaptive equalization of differential phase modulated signals and to a device for demodulating differential phase modulated signals.

BACKGROUND OF THE INVENTION

Digital communication signals are distorted by the transmission medium, leading to intersymbol interference and thus transmission errors. Channel equalization is performed at the receiver to reduce the intersymbol interference, and is well known for standard quadrature amplitude modulated (QAM) signals.
With a standard digital QAM data transmission format and a finite impulse response (FIR-) filter as an equalizer, the error signal to be minimized by the equalizer is a linear function of the equalizer coefficients (FIR filter coefficients). The calculation of the gradient, as required for adaptive updating of the equalizer coefficients, is then straightforward. Many equalizer architectures and update algorithm based on these principles are known and widely used. These QAM equalizers, however, require that carrier-frequency and -phase synchronization (and symbol timing synchronization) have been performed separately and before the signal enters the equalizer. For a channel with static distortion, the equalizer can remain constant, once optimum equalizer coefficients are found. However, this puts the onus on sufficiently fast and reliable carrier phase and frequency synchronisation, which must ensure in particular that the data-dependent *absolute* signal phase is presented to the detector (bit decision device) at the receiver.
In contrast, *differential* phase modulation (Differential Phase Shift Keying, DPSK) puts the data modulation into phase *increments*. The phase increments between successive transmitted symbols are typically multiples of $2\pi/M$ for M-DPSK modulation. The receiver may then *differentiate* the phase between successive received complex symbols z (n). Any phase error (or slow carrier frequency error) at the receiver is thus cancelled. DPSK transmission hence eliminates the need for phase synchronization, and has thus become a widely used modulation format. However, where channel distortion is non-negligible and must be equalized, DPSK cannot easily re-use existing linear equalization schemes, since the DPSK phase differentiation in practice involves some non-linear processing.
If channel equalization has to be added to a given DPSK transmission system, a standard approach might be to add a standard QAM equalizer as a pre-processing stage in the receiver, whose output feeds into the DPSK phase differentiator and detector. While this approach reuses known QAM equalizer schemes, it is inefficient to add a full QAM equalizer including its time-variant tracking of the absolute phase, and then to remove the absolute phase information in the subsequent DPSK phase-differentiation.

DESCRIPTION OF THE INVENTION

It is therefore an objective of the present invention to provide a method and a device for adaptive equalization of differential phase modulated signals, which method and device maintain the advantage of DPSK, particularly, they do not need or imply the determination of the absolute phase and can remain time-invariant even in the presence of slowly time varying carrier phase (frequency offset). It is another objective of the present invention to provide a design of a non-linear equalizer appropriate for DPSK.
This objective is achieved by a method for adaptive equalization of differential phase modulated signals according to claim 1, and a device according to claim 9. Further preferred embodiments are evident from the dependent claims.
According to the present invention, the above-mentioned objectives are particularly achieved in that, for adaptive equalization of a differential phase modulated signal transmitted by a transmitter via a communication channel, determined in a receiver is an estimate of a signal constellation in the transmitter at a stage before phase integration of the signal to be transmitted. For example, the communication channel is a PLC carrier (power line communication) or an air interface for radio communication, and the receiver is a corresponding receiver; modem or demodulator. Determined in the receiver is an error signal as a difference between the estimate of the signal constellation and a phase-differentiated output of an equalizer in the receiver. In the receiver, equalizer coefficients are determined based on the error signal and updated adaptively. For instance, the equalizer coefficients are determined such that a mean squared value of the error signal is minimized. The equalizer coefficients are updated adaptively in the direction of the negative gradient of the squared error surface with respect to the coefficient space. Thereby, the receiver is moved iteratively towards the optimum coefficient setting with regards to the minimum squared error. The gradient used for the adaptive algorithm takes into account the non-linear phase-differentiation.
In a decision-directed mode, the estimate of the signal constellation is determined through remapping of an output of a de-mapping module in the receiver, i.e. the estimate of the signal constellation is a decision-directed estimate based on the re-modulated PSK output of the PSK de-mapper. Precondition for convergence of the adaptation in the decision-directed mode is that the error rate of the decision is low, since decision errors may lead to error propagation. Equalizer coefficients should be close enough to the optimum to ensure convergence. In order to support the initialization of the equalizer coefficients, the transmitter may insert known training signals. The equalizer then uses the known signal constellation in the transmitter before phase integration as a reference for the error signal.

The equalizer may be configured to sample the input signal at $1/T_{sym}$, $T_{sym}$ being the period of the symbols in the differential phase modulated signal. Preferably, however, the equalizer is configured as a so called fractionally-spaced equalizer using a sampling rate higher than $1/T_{sym}$, e.g. samples spaced at $(K/M)T_{sym}$, K and M being integers and M>K. For example, the sample spacing is $1/2\ T_{sym}$. Using a fractionally-spaced equalizer makes the equalizer less sensitive to clock synchronization errors and allows shorter equalizer lengths.

In an embodiment, the differential phase modulated signal is generated using Differential Phase Shift Keying, and the equalizer output z(n) is phase-differentiated using $z(n)\cdot z^*(n-1)$, $z^*(n-1)$ being a complex conjugate of z(n-1).

In a further embodiment, the differential phase modulated signal is generated using DPSK, and the equalizer output z(n) is phase-differentiated using z(n)/z(n-1). The latter requires a complex division, but is self-normalizing.

In yet another embodiment, the differential phase modulated signal is generated using Differential Amplitude and Phase Shift Keying (DAPSK), and the equalizer output z(n) is phase-differentiated using $z(n)\cdot z^*(n-1)/|z(n-1)|$. Using DAPSK, additional data bits can be carried by allowing data-dependent modulation of the symbol *amplitude* (while letting the remaining bits modulate the *phase increment* of successive symbols).

The equalizer update algorithm is derived in accordance with the chosen phase differentiation formula.

In addition to a method of adapting an equalizer for adaptive equalization of differential phase modulated signals, the present invention also relates to a device for demodulating a modulated signal received from a transmitter via a communication channel, e.g. a receiver, a modem or a demodulator for PLC or (mobile) radio communication.

Advantages of the proposed method and equalizer include their insensitivity to phase offset and (small) frequency errors, and the possibility to retrofit conventional DPSK equalizers with a well-defined additional intermediate processing stage, without the need to change any of the existing DPSK processing steps.

BRIEF DESCRIPTION OF THE DRAWINGS

The present invention will be explained in more detail, by way of example, with reference to the drawings in which:

Fig. 1 shows a DPSK transmitter,
Fig. 2 shows a DPSK receiver with an equalizer,
Fig. 3 shows a DAPSK transmitter,
Fig. 4 shows a DAPSK receiver with an equalizer,
Fig. 5 shows a channel impulse response used for simulation,
Fig. 6A shows a communication channel output with 16DAPSK symbols in complex representation,
Fig. 6B shows phase-differentiated (16DAPSK) symbols without equalization,
Fig. 7A shows a communication channel output with 16DAPSK symbols in complex representation,
Fig. 7B shows phase-differentiated and equalized (16DAPSK) symbols,
Fig. 8 shows a graph illustrating the convergence of equalizer coefficients,
Fig. 9A shows a communication channel output with 16DAPSK symbols in complex representation,
Fig. 9B shows phase-differentiated and equalized (16DAPSK) symbols,
Fig. 10 shows a graph illustrating the convergence of equalizer coefficients,

DETAILED DESCRIPTION OF PREFERRED EMBODIMENTS

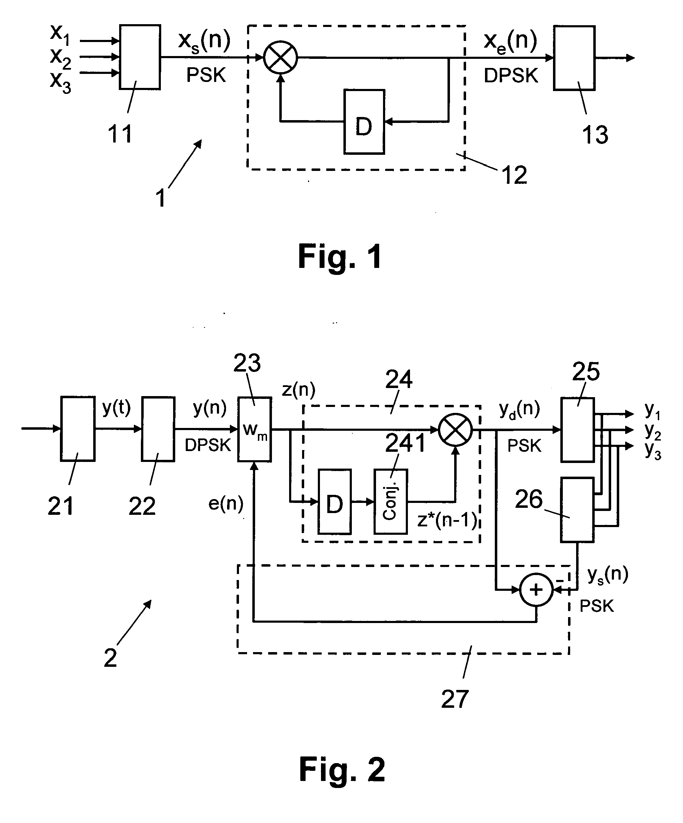

Fig. 1 shows a block diagram illustrating schematically a DPSK transmitter 1 comprising a PSK module 11, an integrator 12, and a pulse shaping module 13. The PSK module 11 generates from the input bits $x_1$, $x_2$, $x_3$ a phase shift keyed signal constellation $x_s(n)$. From the signal constellation $x_s(n)$, integrator 12 generates the phase integrated DPSK signal constellation $x_e(n)$. The output signal formed by pulse shaping module 13 is transmitted via a communication channel such as a PLC channel or a radio air interface.

In Fig. 2, reference numeral 2 refers to a DPSK receiver device comprising a receiving filter 21 (matched filter), a time synchronization/sampling module 22, an equalizer 23 with equalizer coefficients $w_m$, a differentiator 24, a PSK de-mapping module 25, and a PSK re-mapping module 26. Block 27 illustrates schematically the decision-directed equalizer update.

All signals, as defined per Figs. 1 and 2, are considered as complex-valued representations. The signal at the receiver input is

$$y(t) = h * x_e(t) + v(t). \tag{1}$$

After the output of the matched filter 21, the signal is time-synchronized and then sampled, resulting in complex samples y(n). This signal contains inter-symbol interference due to the channel h, i.e.

$$y(nT) = h * x_e(nT) + v(nT) \tag{2}$$

where '*' denotes convolution and v(·) is the additive noise. The equalizer 23 operates on y(·) and produces an intermediate symbol-spaced signal z(·),

$$z(n) = w * y(n) = w_0 y(nT) + \cdots + w_m y(nT - mT') + \ldots + w_{L-1} y(nT - LT' + T') \tag{3}$$

where $w = [w_0, .. w_m, .. w_{L-1}]$ are the T'-spaced complex-valued coefficients of the length-L linear equalizer. With T' = KT/M (K/M < 1, typically T' = T/2), i.e. T' is a fraction of the symbol time $T = T_{sym}$, (3) defines a ‚fractionally-spaced equalizer' (FSE), as described e.g. in G.Ungerboeck "Fractional tap-spacing equalizer and consequences for clock recovery in data modems", IEEE Transactions on Communications, Vol. COM-24, No. 8, August 1976, pp. 856-864. In (3) and the following paragraphs, y(nT-mT') is the continuous-time signal y(t) sampled at time t=nT-mT' (sampling rate 1/T'), while z(n) denotes the n-th element of a T-spaced time-discrete sequence z(·), and similarly for $y_d(n)$, e(n). The equalized signal z(·) then undergoes the standard phase differentiation stage (differentiator 24, block 241)

$$y_d(n) = z(n)z^*(n-1). \tag{4}$$

Finally, the signal $y_d(\cdot)$ is input to the PSK de-mapper 25 to recover the data bits $y_1$, $y_2$ and $y_3$. The equalizer 23 is to be determined such that the error e(·) of the input signal to the PSK de-mapper 25 is minimized,

$$e(n) = y_d(n) - x_s(n) . \tag{5}$$

The error measure is the expected squared error

$$E\left\|e^2(n)\right\| = E\left[e(n)e^*(n)\right] \tag{6}$$

where the expectation is over the random signals $x_s(\cdot)$ and the noise v(·). To find the direction of steepest descent $\Delta w$ for the equalizer update, write w = a + jb for the complex vector of equalizer coefficients $w_m = a_m + jb_m$, where a and b are the real and imaginary parts of w, respectively. Then,

$$e(w + \Delta w) = e(w) + \frac{\partial e}{\partial a'} \Delta a + \frac{\partial e}{\partial b'} \Delta b \tag{7}$$

where ∂e/∂a and ∂e/∂b are the gradient vectors of the complex function *e = e(w) = e(a+jb)* with respect to the real-valued vectors a and b, and the dependency of *e(n,w)* on the time index n is omitted here. Then

$$\left| e^2(w+\Delta w) \right| = \left( e(w) + \frac{\partial e}{\partial a'}\Delta a + \frac{\partial e}{\partial b'}\Delta b \right)\left( e(w) + \frac{\partial e}{\partial a'}\Delta a + \frac{\partial e}{\partial b'}\Delta b \right)^{*} =$$

$$= \left| e^2(w) \right| + e(w)\frac{\partial e}{\partial a^{+}}\Delta a + e(w)\frac{\partial e}{\partial b^{+}}\Delta b + e^{*}(w)\frac{\partial e}{\partial a'}\Delta a + e^{*}(w)\frac{\partial e}{\partial b'}\Delta b + o\left(\left\|\Delta a\right\|,\left\|\Delta b\right\|\right) =$$

$$\approx \left| e^2(w) \right| + 2\cdot\mathrm{Re}\left\{ e^{*}(w)\frac{\partial e}{\partial a'} \right\}\Delta a + 2\cdot\mathrm{Re}\left\{ e^{*}(w)\frac{\partial e}{\partial b'} \right\}\Delta b$$

$$(8)$$

With additive terms of the form g'·$\Delta$a and f'·$\Delta$b, it follows that the direction of steepest descent for the vectors $\Delta$a and $\Delta$b is $\Delta$a = -$\mu$·g and $\Delta$b = -$\mu$·f, where $\mu$ is a positive real-valued scalar. Thus $\Delta$w = $\Delta$a + j$\Delta$b becomes

$$\Delta w = -\mu\cdot\mathrm{Re}\left\{ e^{*}(w)\frac{\partial e}{\partial a} \right\} - \mu\cdot j\cdot\mathrm{Re}\left\{ e^{*}(w)\frac{\partial e}{\partial b} \right\} \qquad (9)$$

so that the adaptive equalizer update equation for the complex coefficients w is

$$w(n+1) = w(n) - \mu\cdot E\left[ \mathrm{Re}\left\{ e^{*}(n)\frac{\partial e}{\partial a} \right\} \right] - \mu\cdot j\cdot E\left[ \mathrm{Re}\left\{ e^{*}(n)\frac{\partial e}{\partial b} \right\} \right] \qquad (10)$$

Next, the gradients $\partial e/\partial a$ and $\partial e/\partial b$ of the complex-valued function e(w) = e(a+jb) with respect to the real-valued vectors a and b is calculated. From (4) and (5),

$$e(n) = y_d(n) - x_s(n) = z(n)z^{*}(n-1) - x_s(n), \qquad (11)$$

and writing the convolution (3) explicitly in terms of the m-th coefficient $w_m = a_m + jb_m$ as

$$z(n) = \ldots + w_m y(nT - mT') + \ldots = \ldots + (a_m + jb_m)y(nT - mT') + \ldots \qquad (12)$$

$$z^{*}(n-1) = \ldots + w_m^{*}y^{*}(nT - mT'-T) + \ldots = \ldots + (a_m - jb_m)y^{*}(nT - mT'-T) + \ldots \qquad (13)$$

one obtains for the derivatives of e(w) with respect to $a_m$ and $b_m$, i.e. m-th component of the gradients $\partial e/\partial a$ and $\partial e/\partial b$,

$$\frac{\partial e}{\partial a_m} = \frac{\partial z(n)}{\partial a_m}z^{*}(n-1) + z(n)\frac{\partial z^{*}(n-1)}{\partial a_m} = y(nT - mT')z^{*}(n-1) + z(n)y^{*}(nT - mT'-T) \qquad (14)$$

$$\frac{\partial e}{\partial b_m} = \frac{\partial z(n)}{\partial b_m} z^*(n-1) + z(n) \frac{\partial z^*(n-1)}{\partial b_m} = j\, y(nT - mT')z^*(n-1) - j\, z(n)y^*(nT - mT'-T)$$

$$(15)$$

Note that it is assumed here that the equalizer coefficients $w_m$ are constant in time. In practice, this must hold over the time window over which the expectation values E[·] are estimated during the update. Inserting (14) and (15) into (10) yields finally after some simplifications

$$w_m(n+1) = w_m(n) - \mu \cdot E\big[e(n)y^*(nT - mT')z(n-1) + e^*(n)y^*(nT - mT'-T)z(n)\big] \quad (16)$$

for the m-th component of w.

In summary, in the DPSK receiver 2 of Fig. 2, the equalizer output

$$z(n) = w_0 y(nT) + \cdots + w_m y(nT - mT') + \ldots + w_{L-1} y(nT - LT'+T') \quad (17)$$

is phase-differentiated using

$$y_d(n) = z(n)z^*(n-1) \quad (18)$$

$y_d(n)$ is the equalized input to the PSK detector (de-mapping module 25). The equalizer coefficient update algorithm is given by (19) and (20). In the spirit of LMS adaptive algorithms, the expectation operators are replaced by their one-sample estimates:

$$e(n) = y_d(n) - x_s(n) \quad (19)$$

$$w_m(n+1) = w_m(n) - \mu \cdot \big(e(n)y^*(nT - mT')z(n-1) + e^*(n)y^*(nT - mT'-T)z(n)\big). \quad (20)$$

The known transmitter constellation $x_s(n)$ of a training sequence is used in (19) during the initialization phase. In the decision-directed mode, $x_s(n)$ is estimated by $y_s(n)$; $y_s(n)$ is the re-modulated PSK output after the PSK de-mapping module 25 (de-mapper) generated by the re-mapping module 26 (re-mapper) from the output values $y_1$, $y_2$ and $y_3$.

In a second embodiment, use is made of the fact that the DPSK transmitter 1 integrates the phase by

$$x_e(n) = x_s(n) \cdot x_e(n-1), \quad (21)$$

with the constraint $|x_s(n)| = 1$. To recover $x_s(n)$ from the received and equalized signal z(n) (which is an estimate of $x_e(n)$), one may thus take

$$y_d(n) = \frac{z(n)}{z(n-1)} \quad \Big(= \frac{z(n)z^*(n-1)}{|z(n-1)|^2}\Big). \quad (22)$$

As with $y_d(n) = z(n)z^*(n-1)$, this differentiates the phase (differentiator 24). The required division is computationally more costly, but has the advantage of eliminating any multiplicative scaling factor in the received signal $y(\cdot)$, i.e. does not require any gain control at the receiver 2.

The division retains the property of complex-differentiability, hence $e = y_d - x_s$ is complex-differentiable with respect to $w = a + jb$, and

$$\frac{\partial e(w)}{\partial w} = \frac{\partial e(w)}{\partial a} = \frac{1}{j}\frac{\partial e(w)}{\partial b},$$ (23)

using the Cauchy-Riemann identities. These can be directly verified by calculating

$$\frac{\partial e}{\partial w_m} = \frac{\partial y_d}{\partial w_m} = \frac{z(n-1)\dfrac{\partial z(n)}{\partial w_m} - z(n)\dfrac{\partial z(n-1)}{\partial w_m}}{z^2(n-1)} = \frac{z(n-1)y(nT-mT') - z(n)y(nT-mT'-T)}{z^2(n-1)}$$ (24)

and comparing with $\partial e/\partial a$ and $\partial e/\partial b$. Therefore (9) becomes

$$\Delta w = -\mu \cdot \mathrm{Re}\left\{e^*(w)\frac{\partial e}{\partial a}\right\} - \mu \cdot j \cdot \mathrm{Re}\left\{e^*(w)\frac{\partial e}{\partial b}\right\} =$$
$$= -\mu \cdot \mathrm{Re}\left\{e^*(w)\frac{\partial e}{\partial w}\right\} - \mu \cdot j \cdot \mathrm{Re}\left\{e^*(w)j\frac{\partial e}{\partial w}\right\} =$$ (25)
$$= -\mu \cdot \left(\mathrm{Re}\left\{e^*(w)\frac{\partial e}{\partial w}\right\} - j \cdot \mathrm{Im}\left\{e^*(w)\frac{\partial e}{\partial w}\right\}\right) = -\mu\left(e^*(w)\frac{\partial e}{\partial w}\right)^*$$

The remaining derivation is as above.

In summary, in the second version of the DPSK receiver 2 of Fig. 2, the equalizer output

$$z(n) = w * y(n)$$ (26)

is phase-differentiated using

$$y_d(n) = \frac{z(n)}{z(n-1)}$$ (27)

which is fed into the PSK de-mapper (de-mapping module 25). The equalizer coefficients are updated according to

$$e(n) = y_d(n) - x_s(n)$$ (28)

$$w_m(n+1) = w_m(n) - \mu \cdot e(n)\left(\frac{y(nT-mT')-y_d(n)y(nT-mT'-T)}{z(n-1)}\right)^* \qquad (29)$$

where $w_m$ is the m-th component of w. Note that both $y_d(n)$ and the gradient have the desirable property that they do not depend on the scaling of the input signal $y(\cdot)$, as any scaling factor is cancelled by the division by $z(n-1)$.

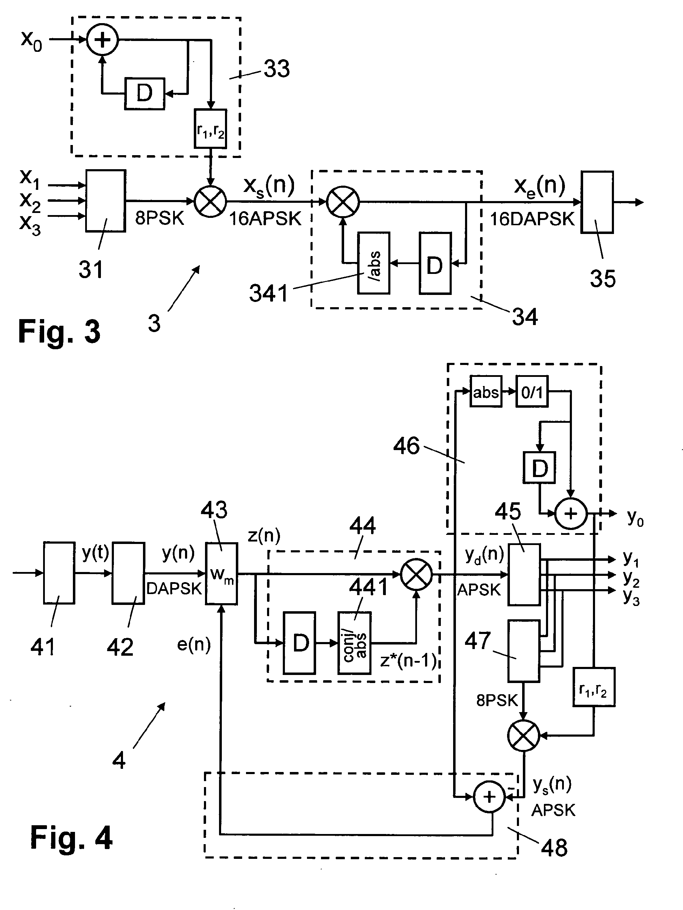

Fig. 3 shows a block diagram illustrating schematically a DAPSK transmitter 3 comprising a PSK module 31, an amplitude shift keying (ASK) module 33, an integrator 34, and a pulse shaping module 35. The PSK module 31 and the ASK module 33 generate from the input code $x_1$, $x_2$, $x_3$ and $x_0$, respectively, a phase and amplitude shift keyed signal constellation $x_s(n)$. From the signal constellation $x_s(n)$, integrator 34 generates the phase integrated DAPSK signal constellation $x_e(n)$.

The APSK sequence $x_s(n)$ is phase-integrated to produce the transmitted signal

$$x_e(n) = x_s(n)\frac{x_e(n-1)}{|x_e(n-1)|}. \qquad (30)$$

In Fig. 4, reference numeral 4 refers to a DAPSK receiver device comprising a receiving filter 41 (matched filter), a time synchronizing/sampling module 42, an equalizer 43 with equalizer coefficients $w_m$, a differentiator 44, an PSK de-mapping module 45, an ASK de-mapping module 46, and a PSK re-mapping module 47. Block 48 illustrates schematically the decision-directed equalizer update. The equalized signal z(n) should approximate $x_e(n)$, so that $x_s(n)$ can be recovered by

$$y_d(n) = \frac{z(n)|z(n-1)|}{z(n-1)} = \frac{z(n)z^*(n-1)}{|z(n-1)|}. \qquad (31)$$

This corresponds to phase differentiation, with normalization to eliminate the amplitude modulation in z(n-1). The derivative $\partial e/\partial a_m$ is therefore

$$\frac{\partial e}{\partial a_m} = \frac{\partial y_d}{\partial a_m} = \frac{|z(n-1)|\dfrac{\partial z(n)z^*(n-1)}{\partial a_m} - z(n)z^*(n-1)\dfrac{\partial|z(n-1)|}{\partial a_m}}{|z(n-1)|^2} = $$
$$= \frac{1}{|z(n-1)|}\frac{\partial z(n)z^*(n-1)}{\partial a_m} - \frac{z(n)}{z(n-1)}\frac{\partial|z(n-1)|}{\partial a_m} \qquad (32)$$

and similarly for $\partial e/\partial b_m$. The derivatives of z(n)z*(n-1) with respect to $a_m$ and $b_m$ are given by (14) and (15), and the derivatives of |z(n-1)| are

$$\frac{\partial|z(n-1)|}{\partial a_m} = \frac{\partial}{\partial a_m}\left(z(n-1)^* z(n-1)\right)^{1/2} = \frac{1}{2|z(n-1)|}\left(z^*(n-1)\frac{\partial z(n-1)}{\partial a_m} + \frac{\partial z^*(n-1)}{\partial a_m}z(n-1)\right) =$$

$$= \frac{1}{2|z(n-1)|}\left(z^*(n-1)y(nT-mT'-T) + y^*(nT-mT'-T)z(n-1)\right) =$$

$$\frac{1}{|z(n-1)|}\text{Re}\left\{y^*(nT-mT'-T)z(n-1)\right\}$$

$$(33)$$

and

$$\frac{\partial|z(n-1)|}{\partial b_m} = \frac{\partial}{\partial b_m}\left(z(n-1)^* z(n-1)\right)^{1/2} = \frac{1}{2|z(n-1)|}\left(z^*(n-1)\frac{\partial z(n-1)}{\partial b_m} + \frac{\partial z^*(n-1)}{\partial b_m}z(n-1)\right) =$$

$$= \frac{1}{2|z(n-1)|}\left(jz^*(n-1)y(nT-mT'-T) - jy^*(nT-mT'-T)z(n-1)\right) =$$

$$\frac{1}{|z(n-1)|}\text{Im}\left\{y^*(nT-mT'-T)z(n-1)\right\}$$

$$(34)$$

Collecting (32), (14), (15), (33), and (34),

$$\text{Re}\left\{e^*(n)\frac{\partial e}{\partial a_m}\right\} + j\cdot\text{Re}\left\{e^*(n)\frac{\partial e}{\partial b_m}\right\} = \ldots =$$

$$= \frac{1}{|z(n-1)|}\left(e(n)y^*(nT-mT')z(n-1) + e^*(n)y^*(nT-mT'-T)z(n)\right) +$$

$$-y^*(nT-mT'-T)\frac{z(n-1)}{|z(n-1)|}\text{Re}\left\{e^*(n)\frac{z(n)}{z(n-1)}\right\}$$

$$(35)$$

which is to be inserted in (10).

In summary, in the DAPSK receiver 4 of Fig. 4, the equalizer output

$$z(n) = w * y(n) \tag{36}$$

is phase differentiated (differentiator 44, block 441) to give

$$y_d(n) = \frac{z(n)z^*(n-1)}{|z(n-1)|} \tag{37}$$

which is fed into the APSK de-mapper (de-mapping module 45). The equalizer coefficients $w_m$ are updated according to

$$e(n) = y_d(n) - x_s(n) \tag{38}$$

$$w_m(n+1) = w_m(n) +$$

$$- \mu \cdot \frac{1}{|z(n-1)|} \left( e(n) y^*(nT - mT') z(n-1) + e^*(n) y^*(nT - mT'-T) z(n) - y^*(nT - mT'-T) g(n) \right) \tag{39}$$

$$g(n) = z(n-1) \operatorname{Re}\left\{ e^*(n) \frac{z(n)}{z(n-1)} \right\} \tag{40}$$

where g(n) is an auxiliary variable not depending on the coefficient index m.

The following paragraphs refer to simulation results for a DAPSK equalizer 43 according to the present invention. The DAPSK modulation contains one (differential-) amplitude bit $x_0$ and three differential phase bits $x_1$, $x_2$, $x_3$ per symbol; in other words the DAPSK modulation uses a differential 2A-8PSK modulation format, subsequently designated as 16DAPSK.

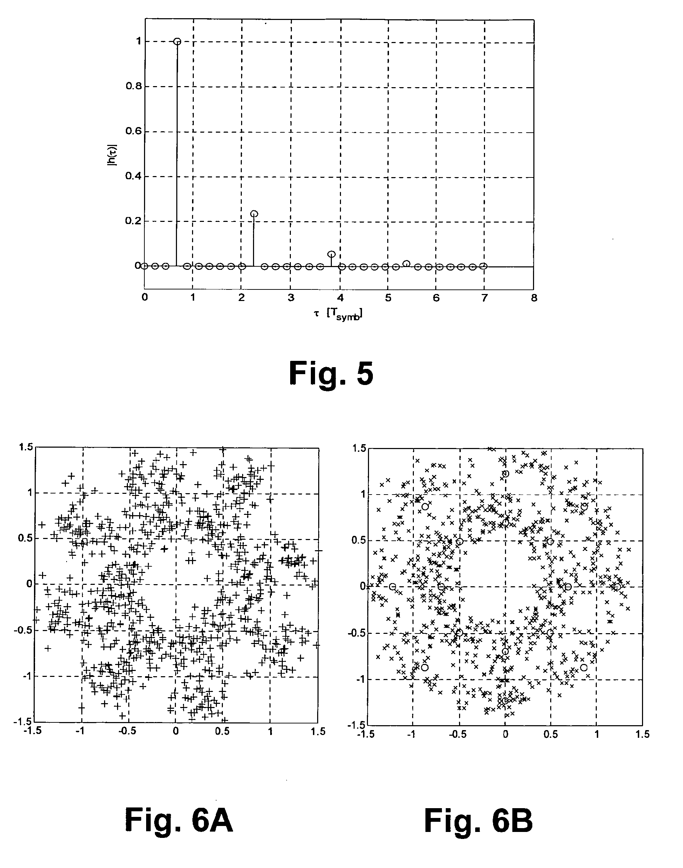

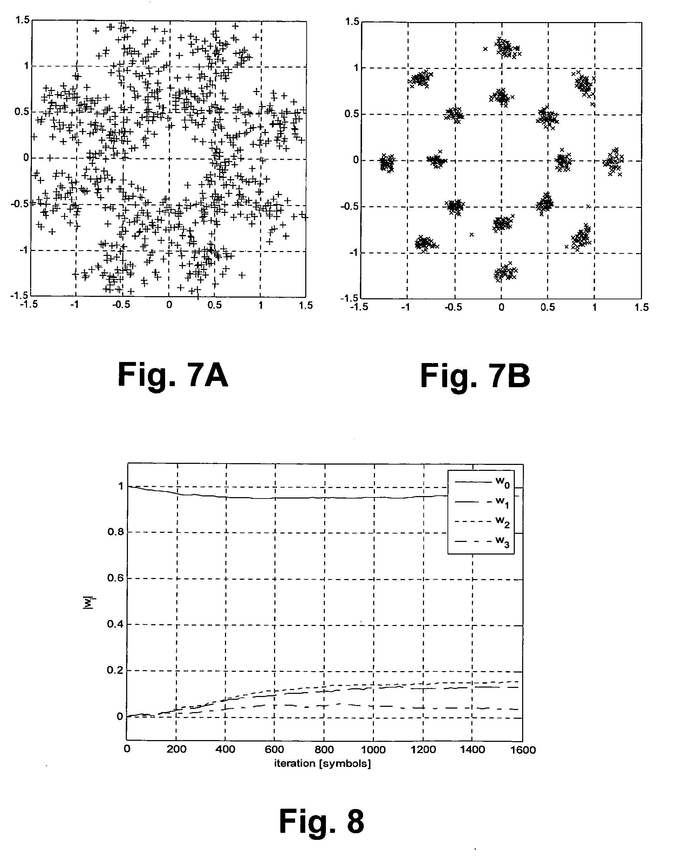

The transmitter 3 produces a sequence of pulse-shaped continuous-time complex DAPSK symbols at a rate of $1/T_{sym}$. The symbols pass through a distorting communication channel with complex-valued static channel impulse response (CIR) shown in Fig. 5 (absolute values of complex CIR, time axis normalized in $T_{sym}$). The individual peaks in the CIR do not occur at multiples of the symbol time $T_{sym}$; the simulation includes an appropriate sampling rate conversion and symbol synchronization. Fig. 6A shows the complex-valued symbols y(n) at the receiver input (channel output 16DAPSK symbols y(n), 800 symbols in complex representation), while Fig. 6B shows the phase-differentiated symbols $y_d(n)$, if no equalization (z(n) = y(n)) is applied (phase-differentiated (16APSK) symbols $y_d(n)$, equation (31),'o' indicates the nominal 16APSK constellation $x_s(n)$). The residual bit error rate BER due to the channel distortion is BER≈7%, even without any additive noise. Figs. 7A (channel output 16DAPSK symbols y(n), 800 symbols in complex representation) and 7B show the effect of equalization. The FIR equalizer has L=4 symbol-spaced coefficients, see equation (3). Fig. 7B shows the equalized and phase-differentiated samples (phase-differentiated and equalized (16APSK) symbols $y_d(n)$, equation (31), equalizer with L=4, no frequency offset), taken after the equalizer 43 has converged (symbols 800 to 1600, see Fig. 8). The BER has decreased to ≈5·10⁻⁴ due to the equalization. Fig. 8 shows the convergence of the four equalizer coefficients $w_0(n)$ to $w_3(n)$ (absolute values of complex $w_0$ to $w_3$). The adaptation algorithm uses decision-directed calculation of the error signal e(n) in equation (38), i.e. $x_s(n)$ is reconstructed in the receiver 4 from the detector output of the ASK de-mapper 46. With low initial BER and sufficiently small step size μ to smooth out any decision errors, the algorithm converges well.

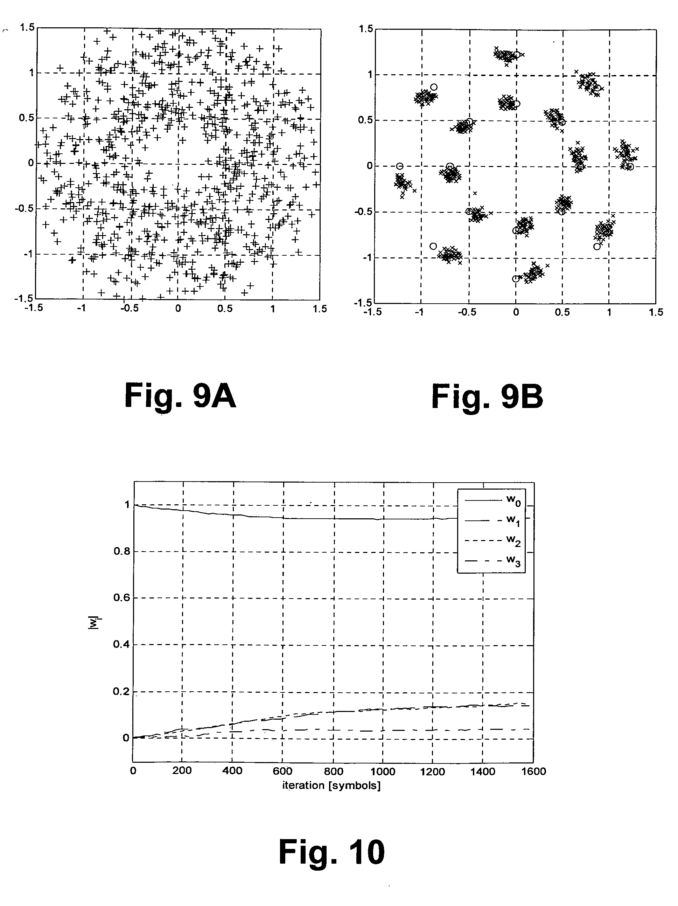

The insensitivity of this equalizer 43 to phase and frequency errors is verified by simulations where a high carrier *frequency* offset $D_{fc}$ with $D_{fc}/R_{symb}$ = 2.08 % is introduced. Figs. 9A (channel output 16DAPSK symbols y(n), 800 symbols in complex representation), 9B (phase-differentiated and equalized (16APSK) symbols $y_d(n)$, equation (31), equalizer with L=4, carrier frequency offset $\Delta f_c$=0.0208·$R_{symb}$, i.e. residual phase error $\Delta\varphi = 2\cdot\pi\cdot\Delta f_c \cdot T_{sym}$=7.5°) and 10 (absolute values of complex $w_0$ to $w_3$) show the effect. The BER in this case is , BER ≈ 9·10⁻⁴. With frequency offset, the channel output does not show any recognizable clustering, compare Fig. 9A with Fig. 6A. The equalized and phase-differentiated symbols in Fig. 9B exhibit the expected residual *phase* offset of 7.5° from the nominal DAPSK phase values 'o'. The equalizer coefficients converge to the same time-independent values as in the frequency offset free case, compare Fig. 10 with Fig. 8.

It must be noted that receiver devices 2, 4, 6, 7 can also be configured as a modem or demodulator device.

**Claims**

1. A method for adaptive equalization of a differential phase modulated signal transmitted by a transmitter (1, 3), the method comprising:

    determining in a receiver (2, 4, 6, 7) an estimate of a signal constellation in the transmitter (1, 3) before phase integration of the signal to be transmitted,
determining in the receiver (2, 4, 6, 7) an error signal as a difference between the estimate of the signal constellation and a phase-differentiated output of an equalizer (23, 43) in the receiver (2, 4, 6, 7), and
updating adaptively equalizer coefficients ($w_m$) of the equalizer (23, 43), the equalizer coefficients ($w_m$) being determined based on the error signal.

2. The method according to claim 1, wherein the estimate of the signal constellation is determined through remapping of an output of a de-mapper (25, 45) in the receiver (2, 4, 6, 7).

3. The method according to claim 1, wherein during an equalizer initialization phase the estimate of a signal constellation is a training signal constellation known to the receiver.

4. The method according to claim 1, wherein the equalizer (23, 43) uses a sampling rate higher than $1/T_{sym}$, and preferably a sampling rate of $2/T_{sym}$, $T_{sym}$ being the period of symbols transmitted with the differential phase modulated signal.

5. The method according to one of claims 1 to 4, wherein the differential phase modulated signal is generated using Differential Phase Shift Keying, and the equalizer output $z(n)$ is phase-differentiated using $z(n) \cdot z^*(n-1)$, $z^*(n-1)$ being a complex conjugate of $z(n-1)$.

6. The method according to one of claims 1 to 4, wherein the differential phase modulated signal is generated using Differential Phase Shift Keying, and the equalizer output $z(n)$ is phase-differentiated using $z(n)/z(n-1)$.

7. The method according to one of claims 1 to 4, wherein the differential phase modulated signal is generated using Differential Amplitude and Phase Shift Keying, and the equalizer output $z(n)$ is phase-differentiated using $z(n) \cdot z^*(n-1)/|z(n-1)|$, $z^*(n-1)$ being a complex conjugate of $z(n-1)$.

8. The method according to one of claims 1 to 7, wherein the equalizer coefficients are determined such that a mean squared value of the error signal is minimized.

9. A device (2, 4, 6, 7) for demodulating differential phase modulated signals received from a transmitter (1, 3) via a communication channel, the device (2, 4, 6, 7) comprising:

   an equalizer (23, 43,) for channel equalization,
   means for determining in the device (2, 4, 6, 7) an estimate of a signal constellation in the transmitter (1, 3) before phase integration of the signal to be transmitted,
   means for determining in the device (2, 4, 6, 7) an error signal as a difference between the estimate of the signal constellation and a phase-differentiated equalizer output, and
   means for updating adaptively equalizer coefficients, the equalizer coefficients being determined based on the error signal.

10. The device of claim 9, wherein the communication channel is one of a power line communication carrier and a radio communication channel.

**Fig. 1**

**Fig. 2**

EP 1 956 781 A1

Fig. 3

Fig. 4

**Fig. 5**

**Fig. 6A**

**Fig. 6B**

## Fig. 7A

## Fig. 7B

## Fig. 8

## Fig. 9A

## Fig. 9B

## Fig. 10

**EP 1 956 781 A1**

**European Patent Office**  **EUROPEAN SEARCH REPORT**

Application Number

EP 07 40 5039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/174788 A1 (LI QINGHUA [US] ET AL) 18 September 2003 (2003-09-18) <br> * abstract * <br> * paragraph [0002] * <br> * paragraph [0005] * <br> * paragraphs [0012] - [0017] * <br> * paragraphs [0021] - [0026] * <br> * paragraphs [0028] - [0035] * <br> * paragraphs [0038] - [0051] * <br> * claims 1-21 * <br> * figures 1-5 * | 1-10 | INV. <br> H04L25/03 |
| X | EP 0 654 925 A1 (ASCOM TECH AG [CH] ASCOM SYSTEC AG [CH]) 24 May 1995 (1995-05-24) <br> * abstract * <br> * page 2, line 8 - line 30 * <br> * page 2, line 35 - line 49 * <br> * page 3, line 8 - line 53 * <br> * page 4, line 10 - line 11 * <br> * page 4, line 55 - page 5, line 46 * <br> * page 6, line 24 - page 7, line 20 * <br> * figures 3,4 * | 1-10 | |
| X | US 6 782 046 B1 (LING STANLEY K [US] ET AL) 24 August 2004 (2004-08-24) <br> * abstract * <br> * figures 2,4 * <br> * column 1, line 58 - column 3, line 11 * <br> * column 3, line 38 - column 6, line 12 * | 1-10 | TECHNICAL FIELDS SEARCHED (IPC) <br><br> H04L |

-/--

The present search report has been drawn up for all claims

| Place of search | Date of completion of the search | Examiner |
|---|---|---|
| The Hague | 20 July 2007 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 40 5039

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KHAYRALLAH A S ET AL: "MAP equalization for DQPSK in multi-pass demodulation" IEEE 52ND VEHICULAR TECHNOLOGY CONFERENCE,, vol. 5, 24 September 2000 (2000-09-24), - 28 September 2000 (2000-09-28) pages 2249-2254, XP010522181 NJ, USA ISBN: 0-7803-6507-0 * abstract * Sections 1-4 | 1-10 | |
| A | DE 102 02 932 A1 (FRIEDRICH ALEXANDER UNI ERLANG [DE]) 21 August 2003 (2003-08-21) * abstract * * paragraph [0002] * * paragraphs [0007] - [0012] * * paragraphs [0018], [0023], [0032] * * paragraphs [0044] - [0068] * * figures 3-7 * | 1-10 | |
| A | SCHOBER R ET AL: "ADAPTIVE NONCOHERENT LINEAR MINIMUM ISI EQUALIZATION FOR MDAPSK SIGNALS" ICC 2000 - IEEE INTERNATIONAL CONFERENCE ON COMMUNICATIONS, vol. 3 OF 3, 18 June 2000 (2000-06-18), pages 1681-1686, XP001208695 NY,US ISBN: 0-7803-6284-5 * abstract * Sections 1-4 * figure 1 * | 1-10 | **TECHNICAL FIELDS SEARCHED (IPC)** |

-/--

The present search report has been drawn up for all claims

| Place of search | Date of completion of the search | Examiner |
|---|---|---|
| The Hague | 20 July 2007 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 40 5039

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROBERT SCHOBER ET AL: "Adaptive Linear Equalization Combined with Noncoherent Detection for MDPSK Signals" IEEE TRANSACTIONS ON COMMUNICATIONS, vol. 48, no. 5, May 2000 (2000-05), pages 733-738, XP011010837 NJ, US ISSN: 0090-6778 * abstract * Sections I-V * figure 1 * | 1-10 | |

TECHNICAL FIELDS
SEARCHED      (IPC)

The present search report has been drawn up for all claims

| Place of search | Date of completion of the search | Examiner |
|---|---|---|
| The Hague | 20 July 2007 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 956 781 A1**

**ANNEX TO THE EUROPEAN SEARCH REPORT
ON EUROPEAN PATENT APPLICATION NO.**

EP 07 40 5039

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2007

| Patent document cited in search report | | Publication date | Patent family member(s) | | Publication date |
|---|---|---|---|---|---|
| US 2003174788 | A1 | 18-09-2003 | NONE | | |
| EP 0654925 | A1 | 24-05-1995 | DE | 59409753 D1 | 21-06-2001 |
| US 6782046 | B1 | 24-08-2004 | NONE | | |
| DE 10202932 | A1 | 21-08-2003 | NONE | | |

EPO FORM P0459

For more details about this annex : see Official Journal of the European Patent Office, No. 12/82

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G.UNGERBOECK.** Fractional tap-spacing equalizer and consequences for clock recovery in data modems. *IEEE Transactions on Communications,* August 1976, vol. COM-24 (8), 856-864